# EUROPEAN PATENT APPLICATION

(11) **EP 4 439 129 A1**
(43) Date of publication of application: **02.10.2024**
(21) Application number: 21964849.0
(22) Date of filing: 22.11.2021
(51) Int. Cl.: G01S 19/42, G01S 5/12, H04L 67/52, H04W 4/02, H04W 4/08, H04W 4/80

(54) **MANAGEMENT SERVER, MANAGEMENT SYSTEM, POSITION DISPLAY METHOD, AND PROGRAM**

(71) Applicant: MITSUBISHI ELECTRIC CORPORATION, Chiyoda-ku Tokyo 100-8310 (JP)
(72) Inventor: KYOYA Takanori, Tokyo 100-8310 (JP)
(74) Representative: Witte, Weller & Partner Patentanwälte mbB
(86) International application number: PCT/JP2021/042843
(87) International publication number: WO 2023/089838

(57) **Abstract**

A wireless communicator (31) receives location information items transmitted from a plurality of information terminals associated with a user. A selector (332) selects, when a distance between the plurality of information terminals that is based on the location information items received by the wireless communicator (31) is less than or equal to a threshold, a location information item corresponding to an information terminal having a highest priority level of priority levels assigned to the plurality of information terminals. A display (34) indicates a current location of the user based on the location information item selected by the selector (332).

## Description

### Technical Field

The present disclosure relates to a management server, a management system, a location display method, and a program.

### Background Art

Buildings such as office buildings have, on a floor, an air-conditioning system including, for example, multiple air conditioners and a management device that manages the air conditioners. Such an air-conditioning system can, for example, estimate the current location of a user on the floor and control an air conditioner for the current location to provide proper air conditioning for the user.

For example, Patent Literature 1 describes a technique for estimating the current location of a user on a floor based on the intensity of a radio field received from a terminal such as a smartphone or a tablet used by the user.

### Citation List

### Patent Literature

Patent Literature 1: Unexamined Japanese Patent Application Publication No. 2021-169890

### Summary of Invention

### Technical Problem

Nowadays, a single user increasingly uses multiple terminals simultaneously, such as a personal computer (PC), a smartphone, and a tablet. When the technique described in Patent Literature 1 is applied to such a case, since the location of a terminal associated with a user is estimated as the current location of the user, causing the current location of the user to be superimposed on a floor map results in indication of multiple overlapping locations of the respective associated terminals.

One terminal may be selected to indicate the current location of the user. For example, the location of the PC may be used as a representative device to indicate the current location of the user.

However, such configuration has a problem of improper indication that occurs when, for example, the user holding the smartphone leaves the desk on which the PC is placed, due to indication that appears as if the user is still present at the location of the PC.

For the aforementioned reasons, techniques are to be developed for correctly indicating the current location of a user who uses multiple terminals.

The present disclosure is made to solve the aforementioned problems, and an objective of the present disclosure is to provide a management server, a management system, a location display method, and a program that enable correctly indicating the current location of a user using multiple terminals.

### Solution to Problem

To achieve the above objective, a management server according to the present disclosure includes reception means for receiving location information items transmitted from a plurality of information terminals associated with a user, selection means for selecting, when a distance between the plurality of information terminals that is based on the location information items received by the reception means is less than or equal to a threshold, a location information item corresponding to an information terminal having a highest priority level of priority levels assigned to the plurality of information terminals, and display means for indicating a current location of the user based on the location information item selected by the selection means.

### Advantageous Effects of Invention

In the management server according to the present disclosure, (i) the reception means receives the location information items transmitted from the plurality of information terminals associated with the user, (ii) the selection means selects, when the distance between the plurality of information terminals that is based on the location information items received by the reception means is less than or equal to a threshold, the location information item corresponding to the information terminal having the highest priority level of the priority levels assigned to the plurality of information terminals, and (iii) the display means indicates the current location of the user based on the location information item selected by the selection means. This configuration enables correctly indicating the current location of a user even in the case where the user uses multiple terminals.

### Brief Description of Drawings

FIG. 1 is a schematic diagram illustrating an example of overall configuration of a management system according to Embodiment 1 of the present disclosure;
FIG. 2 is a block diagram illustrating an example of configuration of a transmission device and an information terminal according to Embodiment 1 of the present disclosure;
FIG. 3 is a schematic diagram for explanation of a specific device arrangement across a floor;
FIG. 4 is a schematic diagram for explanation of the positional relationship between the information terminal and transmission devices;
FIG. 5 is a block diagram illustrating an example of configuration of a management server according to Embodiment 1 of the present disclosure;
FIG. 6 is a schematic diagram illustrating an example floor map appearing on a display;
FIG. 7 is a flowchart for explanation of setting information transmission processing and setting information reception processing according to Embodiment 1 of the present disclosure;
FIG. 8 is a flowchart for explanation of location indication processing according to Embodiment 1 of the present disclosure;
FIG. 9 is a block diagram illustrating an example of configuration of an information terminal according to Embodiment 2 of the present disclosure;
FIG. 10 is a block diagram illustrating an example of configuration of a management server according to Embodiment 4 of the present disclosure;
FIG. 11 is a block diagram illustrating an example of configuration of a management server according to Embodiment 5 of the present disclosure; and
FIG. 12 is a block diagram illustrating an example of configuration of a management server according to Embodiment 6 of the present disclosure.

### Description of Embodiments

Embodiments of the present disclosure are described in detail below with reference to the drawings. In the drawings, the same reference signs denote the same or equivalent components. Although a management system that manages the location of a user is described below, the present disclosure is also applicable to, as described later, a facility equipment system that controls equipment such as air-conditioning equipment and lighting equipment. More specifically, the embodiments described below are illustrative and do not limit the scope of the present disclosure. Thus, those skilled in the art can achieve embodiments in which some or all of the elements are replaced with the equivalents. Such embodiments also fall within the scope of the present disclosure.

### Embodiment 1

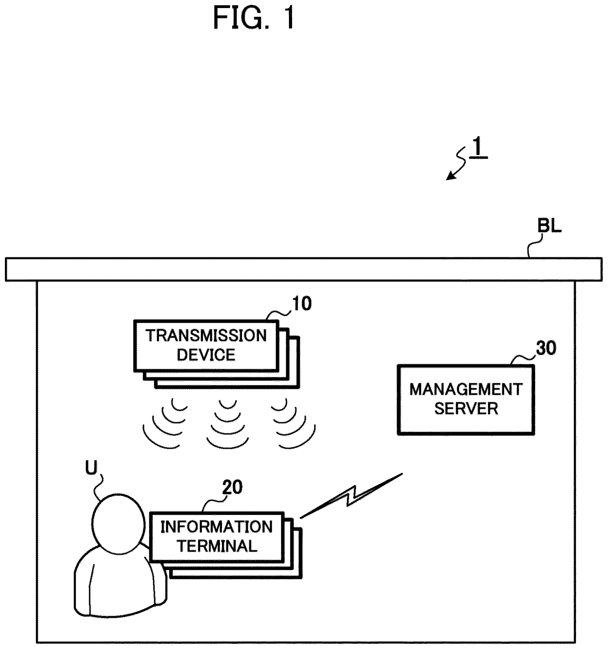

FIG. 1 is a schematic diagram illustrating an example of overall configuration of a management system 1 according to Embodiment 1 of the present disclosure. The management system 1 is an example system that manages the location of a user in a room of a building BL such as an office building, and includes multiple transmission devices 10, multiple information terminals 20, and a management server 30. Each of the information terminals 20 is connected to the management server 30, for example, in a manner that allows wireless communication.

The transmission devices 10 are, for example, spaced on a ceiling in the building BL and transmit radio signals. More specifically, the multiple transmission devices 10 are fixed on the ceiling over a floor and transmit radio signals from the ceiling across the floor. Although the transmission devices 10 are installed on the ceiling in the example described below, the transmission devices 10 may be installed on, for example, a wall or a pillar, instead of being installed on the ceiling.

The information terminals 20 are, for example, terminals such as a smartphone, a tablet, and a PC and used by a user U admitted to the floor. The user U may use the multiple information terminals 20 at a time, and as described later, the multiple information terminals 20 to be targets are associated with the user U. As described in detail later, each of the information terminals 20 identifies the local location on the floor and transmits a location information item indicating the identified location to the management server 30. Although a single user U is shown in FIG. 1, other users may be in the room and also use multiple information terminals 20.

The management server 30 is, for example, a server computer that collects, stores, and processes the location information item of each of the information terminals 20. As described in detail later, when receiving the location information item from each of the information terminals 20, the management server 30 appropriately selects one of the location information items and indicates the current location of the user U based on the selected location information item.

The transmission devices 10, the information terminals 20, and the management server 30 are described separately in detail below with reference to the drawings.

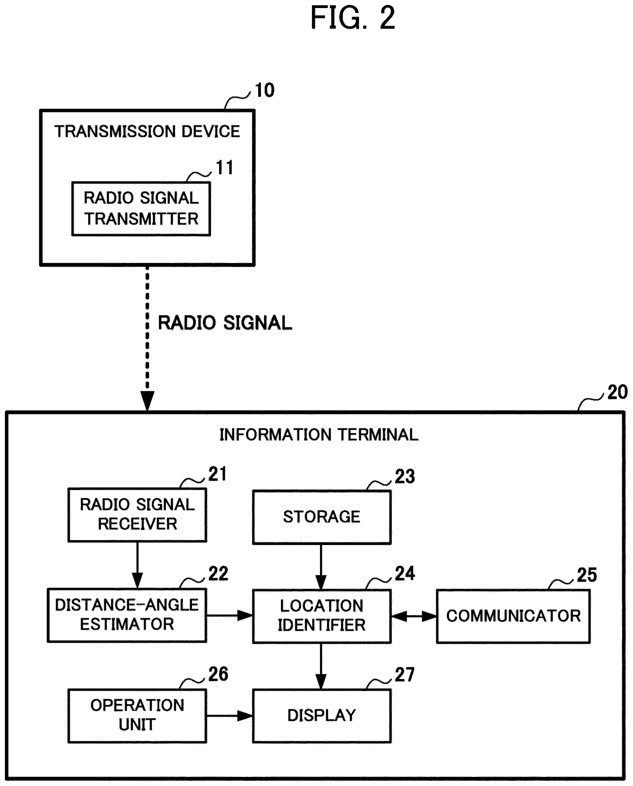

The transmission devices 10 and the information terminals 20 are first described in detail with reference to FIG. 2. FIG. 2 is a block diagram illustrating an example of configuration of a transmission device 10 and an information terminal 20 according to Embodiment 1 of the present disclosure. As illustrated, the transmission device 10 includes a radio signal transmitter 11.

The radio signal transmitter 11 transmits, for example, a radio signal based on a wireless technology standard such as Bluetooth (registered trademark) Low Energy (BLE) or Wi-Fi. The radio signal includes a device identification (ID) for identifying the transmission device 10. More specifically, the radio signal transmitter 11 transmits radio signals including the device ID across the floor. The radio signal may further include angle-of-departure (AoD) information. For example, the radio signal transmitter 11 may use an array antenna having an arrangement of multiple antenna elements to transmit radio signals further including AoD information across the floor.

As illustrated in FIG. 2, the information terminal 20 includes a radio signal receiver 21, a distance-angle estimator 22, a storage 23, a location identifier 24 as an example of identification means, a communicator 25 as an example of transmission means, an operation unit 26, and a display 27. The distance-angle estimator 22 and the location identifier 24 are implemented by, for example, a central processing unit (CPU) using a random-access memory (RAM) as a work memory to appropriately execute programs stored in a read-only memory (ROM).

The radio signal receiver 21 receives radio signals transmitted from the multiple transmission devices 10. The radio signal receiver 21 detects the radio field intensity of each radio signal and the phase differences between the radio signals, and associates the detected radio field intensity and phase differences with the corresponding device ID. The radio signal receiver 21 may use, for example, an array antenna to receive radio signals transmitted from the transmission devices 10. In this case, the radio signal receiver 21 can detect a phase difference for a radio signal.

The distance-angle estimator 22 estimates the distance between the information terminal 20 and each of the transmission devices 10 based on the radio field intensity detected by the radio signal receiver 21. The radio field intensity is, for example, in inverse proportion to the square of the distance from the transmission device 10. More specifically, the radio field intensity increases as the distance from the transmission device 10 decreases, or in other words, the radio field intensity decreases as the distance from the transmission device 10 increases. Based on such characteristics, the distance-angle estimator 22 estimates the distance from the transmission device 10 based on the radio field intensity.

The distance-angle estimator 22 estimates the angle between the information terminal 20 and the transmission devices 10 based on the phase differences detected by the radio signal receiver 21. For example, the distance-angle estimator 22 refers to the storage 23 (described later) and uses the device ID in each of the multiple radio signals received by the radio signal receiver 21 to identify the installation location of the corresponding transmission device 10. In an example, the distance-angle estimator 22 estimates the angle at which the radio signal has arrived, or the angle of arrival (AoA), based on the phase differences and the distances between the transmission devices 10 determined from the installation locations. In an example, the angle is estimated with respect to the horizontal direction, or the direction along the ceiling. However, the angle may be estimated with respect to the vertical direction, or the direction of gravitational force. For the radio signal receiver 21 using an array antenna to receive radio signals as described above, the distance-angle estimator 22 may estimate the AoA of each radio signal based on the phase difference for the radio signal provided by the array antenna. As described above, for a radio signal including AoD information, the distance-angle estimator 22 may estimate the AoA of the radio signal based on the AoD information.

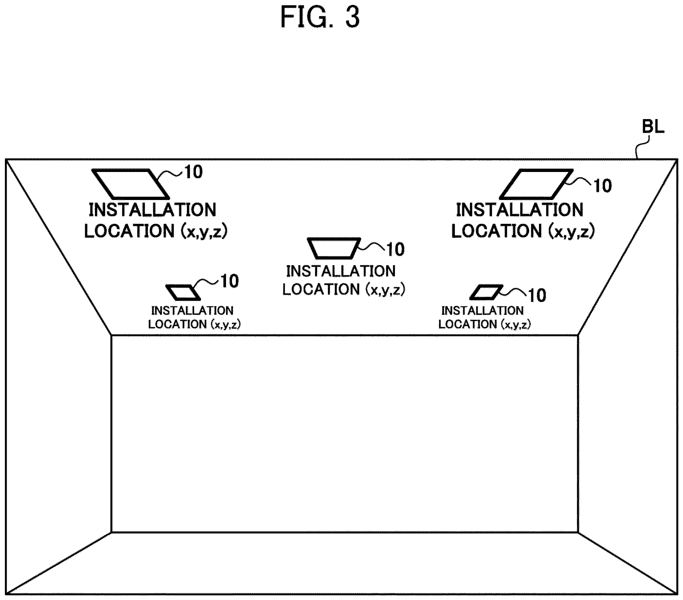

For example, the storage 23 stores placement information indicating the placement location of each of the transmission devices 10. In an example building BL illustrated in FIG. 3, the multiple transmission devices 10 are installed on the ceiling over a floor. In this example, the installation location of each of the transmission devices 10 across the floor is measured, and placement information generated based on the measurements is prestored in the storage 23. The installation location is associated with the device ID of the transmission device 10. The placement information prestored into the storage 23 is a mere example, and the user U may enter placement information as appropriate. When, for example, installation locations are entered on the operation unit 26, the locations may be stored into the storage 23 as placement information.

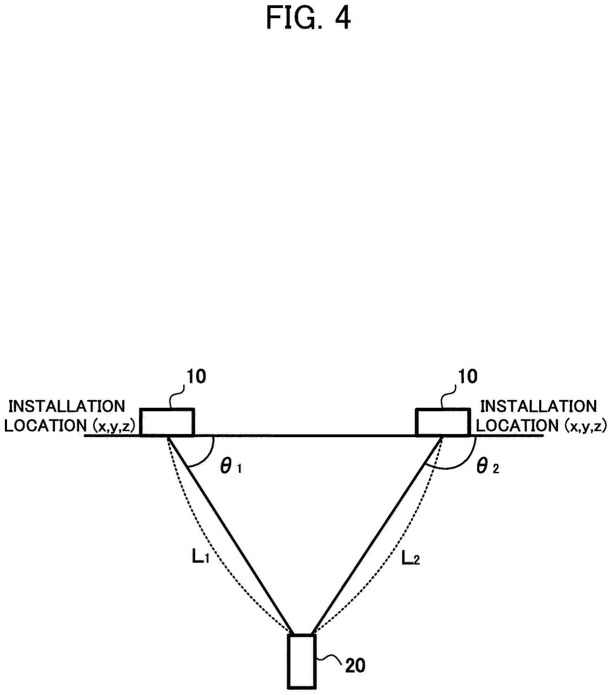

Referring back to FIG. 2, the location identifier 24 uses the distances and angles estimated by the distance-angle estimator 22 and the placement information stored in the storage 23 to identify the location of the information terminal 20 on the floor. For example, the location identifier 24 identifies the location of the information terminal 20 based on the relationship between distances L1 and L2 and angles θ1 and θ2 estimated from the installation locations of the transmission devices 10 as illustrated in FIG. 4.

Referring back to FIG. 2, the communicator 25 wirelessly communicates with the management server 30. For example, the communicator 25 transmits, to the management server 30, the location information item including the location identified by the location identifier 24 and the device IDs. In addition, the communicator 25 transmits, to the management server 30, setting information inputted by the operation unit 26 described below.

The operation unit 26 is, for example, a keyboard or a touchscreen and operated by the user U to input various settings. For example, the operation unit 26 inputs a user ID and a priority level assigned to the information terminal 20 used by the user U. The user ID is information that associates the information terminal 20 with the user. More specifically, the terminal ID is associated with the user ID. The priority level is a degree for specifying, among the multiple information terminals 20 used by the user U, an information terminal 20 that can be a display target. For example, as the value of the assigned priority level decreases, the terminal becomes more likely to be the display target. In addition, the operation unit 26 may input and add the display name of the information terminal 20 to setting information.

The display 27 indicates a screen on which, for example, a user ID and a priority level are set. In addition, the display 27 may indicate the same screen as a floor map appearing on the management server 30 to allow the current location of the user U and the current locations of other users to be indicated.

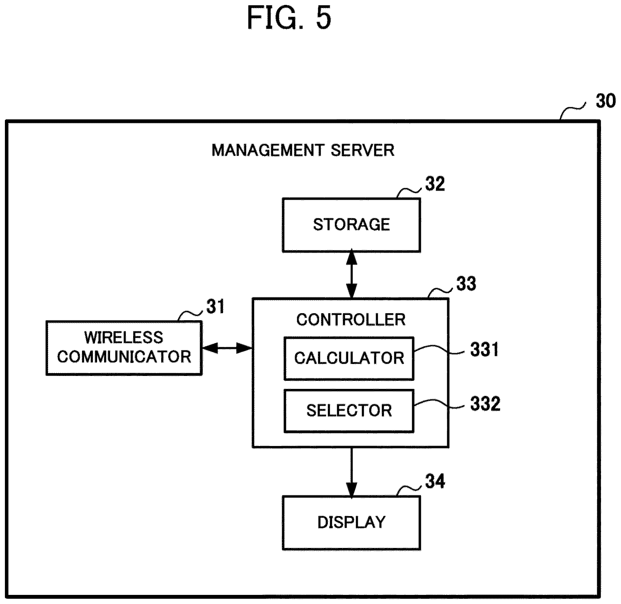

The management server 30 is described in detail below with reference to FIG. 5. FIG. 5 is a block diagram illustrating an example of configuration of the management server 30 according to Embodiment 1 of the present disclosure. As illustrated, the management server 30 includes a wireless communicator 31 as an example of reception means, a storage 32 as an example of storage means, a controller 33, and a display 34 as an example of display means.

The wireless communicator 31 wirelessly communicates with the information terminals 20. For example, the wireless communicator 31 receives the location information items transmitted from the information terminals 20.

The storage 32 stores, for example, a floor map. The floor map is a floor plan including, for example, desks, chairs, and fixtures placed on the floor. In addition, the storage 32 stores setting information received from the information terminals 20. More specifically, the storage 32 stores, for example, the priority levels and the correspondences between the terminal IDs and the user ID that associates the information terminals 20 with the user. In addition, when the distances between the information terminals 20 calculated by the controller 33 (a calculator 331) described later are less than or equal to a threshold, the storage 32 stores the location information items as proximity range information.

The controller 33 includes, for example, a CPU, a ROM, and a RAM and controls the operation of the overall management server 30. For example, the controller 33 includes the calculator 331 and a selector 332 as an example of selection means. The calculator 331 and the selector 332 are, for example, implemented by the CPU using the RAM as a work memory to appropriately execute programs stored in the ROM.

When the wireless communicator 31 receives the location information item transmitted from each of the information terminals 20, the calculator 331 calculates the distance between the terminals linked with the same user ID. More specifically, when the wireless communicator 31 receives the location information item transmitted from each of the multiple information terminals 20 associated with the user U, the calculator 331 calculates the distances between the information terminals 20 based on the received location information items.

When the distances between the information terminals 20 calculated by the calculator 331 are less than or equal to the threshold, the selector 332 selects the location information item corresponding to the information terminal 20 having the highest priority level of the priority levels assigned to the information terminals 20. The threshold is a value for determining whether each of the information terminals 20 is located within a proximity range. In an example, the threshold is specified as 5 m. More specifically, when all the distances between the information terminals 20 are less than or equal to 5 m, the information terminals 20 are determined to be near each other. In this case, the location information items transmitted from the multiple information terminals 20 are stored into the storage 32 as proximity range information.

In contrast, when at least one of the distances between the information terminals 20 calculated by the calculator 331 is greater than the threshold, the selector 332 selects, from the location information items, the location information item indicating the farthest location from the range indicated by the proximity range information stored in the storage 32. More specifically, the selector 332 selects the location information item of the information terminal 20 estimated to have moved together with the user U from the previous proximity range.

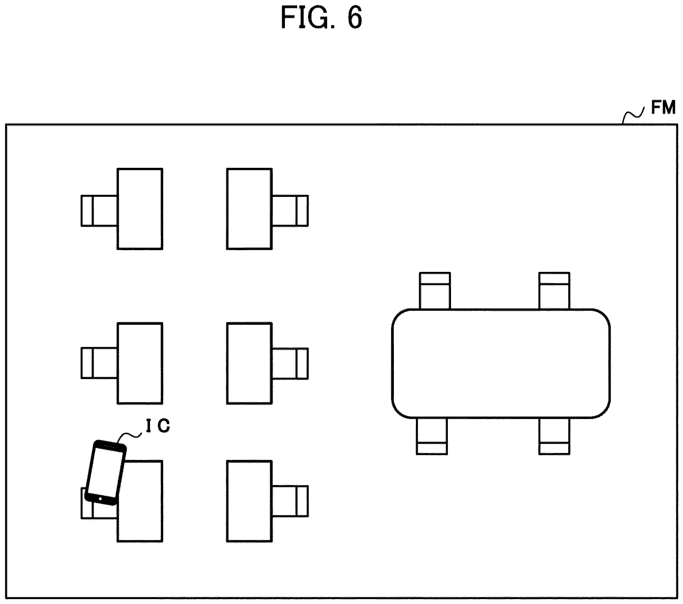

The display 34 indicates the current location of the user U based on the location information item selected by the selector 332. For example, as illustrated in FIG. 6, the display 34 superimposes an icon IC on a floor map FM to indicate the current location of the user U. More specifically, the selector 332 selects a single location information item as appropriate to allow the current location of the user U to be indicated correctly for the user U using the multiple information terminals 20 across the floor.

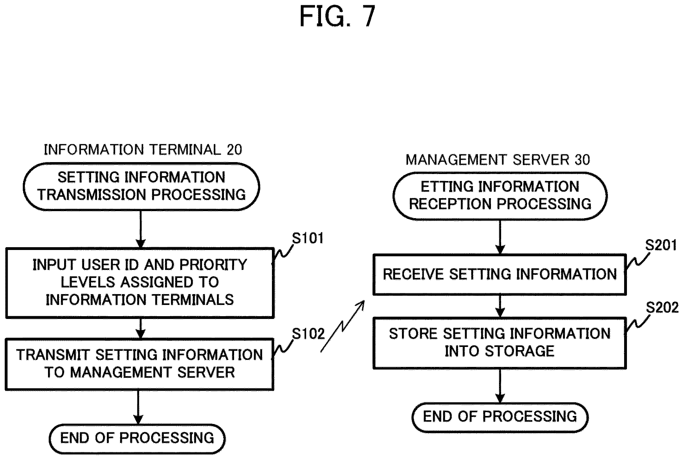

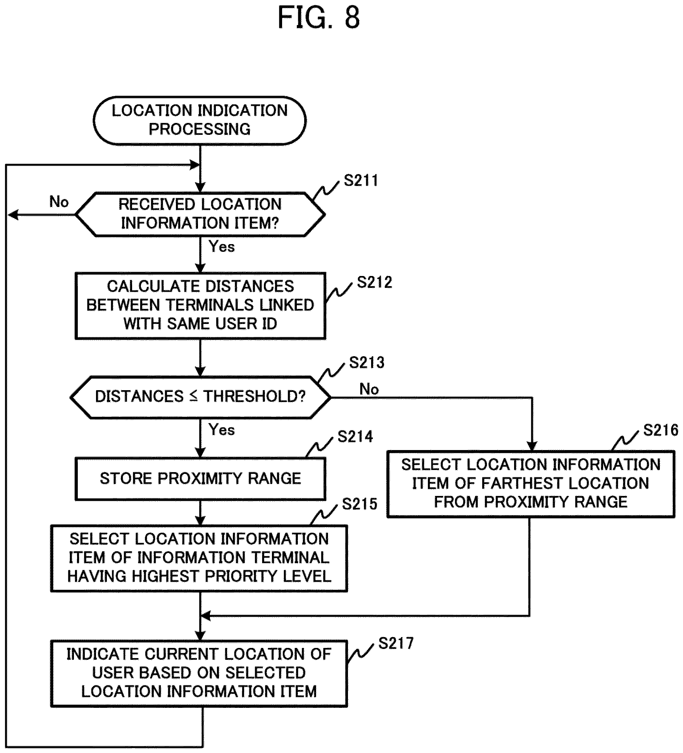

The operation of the management system 1 with the above configuration is described below with reference to FIGS. 7 and 8. FIG. 7 is a flowchart describing an example of setting information transmission processing and an example of setting information reception processing according to Embodiment 1 of the present disclosure. FIG. 8 is a flowchart describing example location indication processing in Embodiment 1 of the present disclosure.

The setting information transmission processing and the setting information reception processing are described first with reference to FIG. 7. The setting information transmission processing is executed by an information terminal 20, and the setting information reception processing is executed by the management server 30.

First, the information terminal 20 inputs a user ID and priority levels assigned to the information terminals 20 (step S101). More specifically, when the user U operates the operation unit 26, the information terminal 20 inputs the user ID and the priority levels.

The information terminal 20 transmits setting information to the management server 30 (step S102). More specifically, the communicator 25 transmits, to the management server 30, setting information including the user ID and the priority levels inputted in step S101. The setting information may include the display name.

The management server 30 receives the setting information (step S201). More specifically, the wireless communicator 31 receives the setting information transmitted from the information terminal 20.

The management server 30 stores the setting information received in step S201 into the storage 32 (step S202). More specifically, the storage 32 stores, for example, the priority levels and the correspondences between the terminal IDs and the user ID that associates the information terminals 20 with the user.

The execution of the setting information transmission processing and the setting information reception processing as described above allows the management server 30 to manage the priority levels and the user ID assigned to the multiple information terminals 20 used by the user U.

The location indication processing is now described below with reference to FIG. 8. The location indication processing is performed by the management server 30.

The management server 30 first determines whether the location information item has been received (step S211). More specifically, the controller 33 determines whether the wireless communicator 31 has received the location information item transmitted from each of the multiple information terminals 20 associated with the user U. Step S211 is an example reception step.

When determining that the location information item is not received (No in step S211), the management server 30 waits until the location information item is received.

In contrast, when determining that the location information item is received (Yes in step S211), the management server 30 computes the distances between the terminals linked with the same user ID (step S212). More specifically, the calculator 331 calculates the distances between the information terminals 20 based on the received location information items.

The management server 30 determines whether the distances are less than or equal to the threshold (step S213). More specifically, the selector 332 determines whether all the distances between the information terminals 20 calculated in step S212 are less than or equal to the threshold.

When determining that the distances are less than or equal to the threshold (Yes in step S213), the management server 30 stores a proximity range (step S214). More specifically, upon the determination that the information terminals 20 are near each other, the controller 33 stores the location information items received in step S211 into the storage 32 as proximity range information.

The management server 30 selects the location information item of the information terminal 20 having the highest priority level (step S215). More specifically, the selector 332 refers to the storage 32 and selects the location information item corresponding to the information terminal 20 having the highest priority level of the priority levels assigned to the information terminal 20 linked with the same user ID. The management server 30 then advances the processing to step S217 (described later). Step S215 and step S216 described below correspond to an example selection step.

In contrast, when determining in step S213 that the distances are greater than the threshold, or in other words, the distances are not less than or equal to the threshold (No in step S213), the management server 30 selects the location information item of the farthest location from the proximity range (step S216). More specifically, when determining that at least one of the distances between the information terminals 20 is greater than the threshold, the selector 332 selects, from the location information items, the location information item indicating the farthest location from the range indicated by the proximity range information stored in the storage 32 in step S214. More specifically, the selector 332 selects the location information item of the information terminal 20 estimated to have moved together with the user U from the previous proximity range.

The management server 30 indicates the current location of the user U based on the selected location information item (step S217). More specifically, the controller 33 indicates the current location of the user U on the display 34 based on the location information item selected in step S215 or step S216. For example, as illustrated in FIG. 6, the controller 33 superimposes the icon IC on the floor map FM to indicate the current location of the user U. Step S217 corresponds to an example of indication step.

According to the location indication processing as described above, when the multiple information terminals 20 used by the user U are located within the proximity range less than or equal to the threshold, the location information item of the information terminal 20 having the highest priority level by the user U is selected, and is indicated as the current location of the user U. More specifically, unselected location information item is not used, and thus the indication of the current location of the user U does not duplicate. For example, the user U may use a PC and a smartphone with the PC having a priority level higher than the priority level of the smartphone. In this case, when the distance between the PC and the smartphone is less than or equal to the threshold, the location information item of the PC is selected and indicated as the current location of the user U. More specifically, the location of the user U on the floor is uniquely determined and indicated by the location of the PC.

In this state, when, for example, the user U leaves the desk with the smartphone and moves on the floor, the distance between the information terminals 20 exceeds the threshold. More specifically, when the user U moves with the smartphone with the PC left on the desk, the distance between the PC and the smartphone exceeds 5 m. In this case, the location information item of the smartphone that is farthest from the proximity range stored in the storage 32 is selected and indicated as the current location of the user U. More specifically, when the smartphone moving with the user U is more than 5 m away from the previous location, the indication of the current location of the user is switched from the location of the PC with the higher priority level to the location of the smartphone. When the distance between the PC and the smartphone is less than or equal to 5 m during returning of the user U to the desk, the current location of the user is switched from the location of the smartphone to the location of the PC with the higher priority level.

This allows the current location of the user U to be indicated correctly for the user U using the multiple information terminals 20.

In Embodiment 1 described above, when, for example, the distance between the PC and the smartphone is about 5 m, or about the threshold, frequent alteration between the location of the PC and the location of the smartphone at short time intervals may possibly occur depending on location accuracy. In this case, the duration may also be used as a parameter. When, for example, the distance between the PC and the smartphone is greater than the threshold for 10 seconds or more, the location information item of the smartphone may be selected and indicated as the current location of the user U. This prevents the location of the PC and the location of the smartphone from being alternated frequently as the current location at short time intervals.

### Embodiment 2

Although Embodiment 1 describes a case where the user U uses the multiple information terminals 20 on the floor, that is, indoors, each of the information terminals 20 may detect the location information item indoors and also outdoors to enable seamless and automatic indication of the current location of the user even in the case where the user U moves indoors and also outdoors.

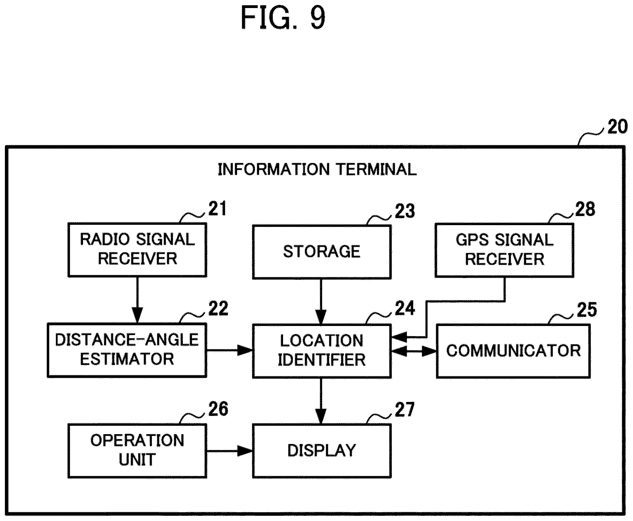

The embodiment is described below with reference to FIG. 9. FIG. 9 is a block diagram illustrating an example of configuration of an information terminal 20 according to Embodiment 2 of the present disclosure. As illustrated in FIG. 9, the information terminal 20 includes a radio signal receiver 21, a distance-angle estimator 22, a storage 23, a location identifier 24 as an example of identification means, a communicator 25 as an example of transmission means, an operation unit 26, a display 27, and a Global Positioning System (GPS) signal receiver 28. More specifically, the information terminal 20 illustrated in FIG. 9 is the information terminal 20 in FIG. 2 further including the GPS signal receiver 28.

The GPS signal receiver 28 receives, for example, GPS signals transmitted from multiple GPS satellites. In an example, when the radio signal receiver 21 receives no radio signals, the information terminal 20 is estimated to be located outdoors, and the GPS signal receiver 28 receives GPS signals transmitted from the GPS satellites.

The location identifier 24 identifies the location of the information terminal 20 outdoors when the GPS signal receiver 28 receives the GPS signals.

The information terminal 20 illustrated in FIG. 9 identifies the own indoor location based on radio signals transmitted from the transmission devices 10 described above, and identifies the own outdoor location based on GPS signals transmitted from the GPS satellites. When, for example, the user U returns from outside the office with a business smartphone and activates a business PC, the information terminal 20 selected in accordance with the priority level switches seamlessly and automatically from the smartphone to the PC to allow the current location of the user U to be indicated correctly.

### Embodiment 3

In Embodiments 1 and 2 described above, the current location of the user U is indicated continuously. However, some users may request privacy protection. To protect privacy, the place where the current location is indicated may be defined, and the current location of the user U may not be indicated in other places.

For example, indication place information may be assigned with a higher priority than the priority levels assigned to the information terminals 20. In an example, the user U may define a location range of the office as the indication place information. In this case, when the location information item received from the information terminal 20 indicates a location in the location range of the office, the management server 30 identifies this information terminal 20 as a location indication candidate. When the user U goes outside with the information terminal 20, the location information transmitted from this information terminal 20 deviates from the indication place information. Thus, for example, the management server 30 clears the priority level of the information terminal 20 and excludes the corresponding location information item from selection targets.

This allows the privacy of the user U to be protected appropriately for the information terminals 20 for both business and private use, such as a terminal for bring your own device (BYOD).

### Embodiment 4

Although Embodiments 1 to 3 described above describe examples in which fixed association between the information terminals 20 and the user is fixed, some cases exist in which different users on a floor alternately use an information terminal 20 distributed for business use. For example, for an office in which each user uses multiple information terminals 20 used during a business trip, such as a PC for business trips and a smartphone for business trips, the information terminals 20 are to be associated with a different user for each business trip. The correspondence between a terminal ID and a user ID may thus be edited easily.

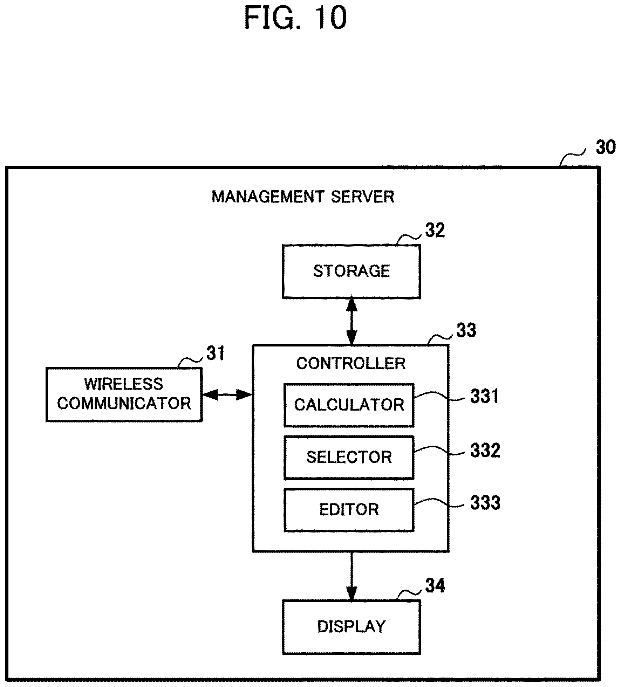

The embodiment is described below with reference to FIG. 10. FIG. 10 is a block diagram illustrating an example of configuration of a management server 30 according to Embodiment 4 of the present disclosure. As illustrated in FIG. 10, the management server 30 includes a wireless communicator 31 as an example of reception means, a storage 32 as an example of storage means, a controller 33, and a display 34 as an example of display means. The controller 33 includes a calculator 331, a selector 332 as an example of selection means, and an editor 333 as an example of edition means. More specifically, the management server 30 illustrated in FIG. 10 is the management server 30 in FIG. 5 further including the editor 333 in the controller 33.

The editor 333 edits the correspondences between (i) the terminal IDs that are each for identification of a corresponding information terminal of multiple information terminals 20 and (ii) the user ID for identification of a user. More specifically, on a management screen of the management server 30, each of target terminal IDs and the user ID to be assigned are simply associated using a group editing function. For example, the correspondence between each of the terminal ID and the user ID may be easily edited by placing the user ID to be assigned onto each terminal ID by dragging and dropping.

### Embodiment 5

In Embodiments 1 to 4 described above, the location information item of the information terminal 20 is detected at a fixed frequency. However, for example, the smartphone and the tablet are operated by power from internal batteries in the devices. Frequent detection may thus shorten the operating time. To avoid this, a command for lowering the detection frequency may be issued to information terminals 20 having lower priority levels.

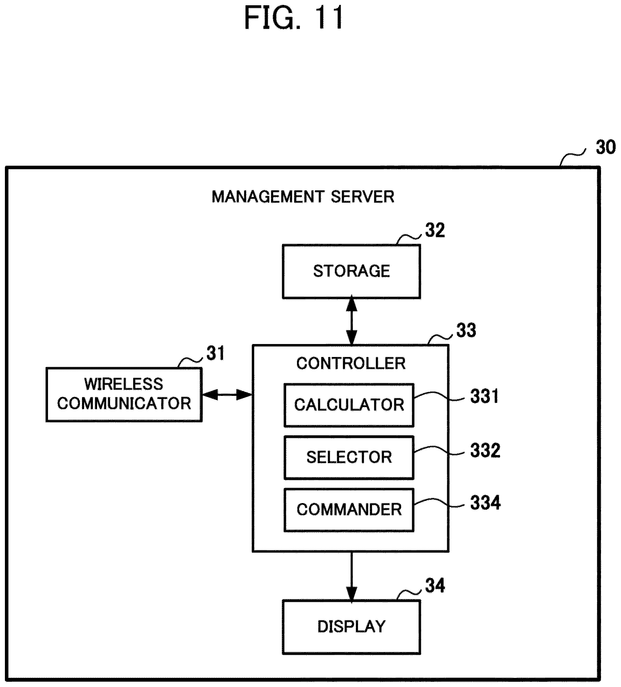

The embodiment is described below with reference to FIG. 11. FIG. 11 is a block diagram illustrating an example of configuration of a management server 30 according to Embodiment 5 of the present disclosure. As illustrated in FIG. 11, the management server 30 includes a wireless communicator 31 as an example of reception means, a storage 32 as an example of storage means, a controller 33, and a display 34 as an example of display means. The controller 33 includes a calculator 331, a selector 332 as an example of selection means, and an issuer 334 as an example of issuing means. More specifically, the management server 30 illustrated in FIG. 11 is the management server 30 in FIG. 5 further including the issuer 334 in the controller 33.

The issuer 334 issues a command for lowering the detection frequency of the location information item, to the information terminals 20 except the information terminal 20 having the highest priority level of the priority levels assigned to the multiple information terminals 20. For example, with lower priority levels assigned to information terminals 20 such as a smartphone and a tablet, when the distances between the information terminals 20 are less than or equal to the threshold, the management server 30 issues a command for lowering the detection frequency to the smartphone and the tablet. This reduces the detection frequency of the smartphone and the tablet and thus power consumption to allow the internal batteries to last longer.

In this state, when the user U moves with the smartphone or the tablet, the location information item of the smartphone or the tablet may also be selected. In this case, the issuer 334 issues a command for restoring the detection frequency to the target information terminal 20. More specifically, when the selector 332 selects the location information item received from the information terminal 20 to which a command for lowering the detection frequency is issued, the issuer 334 issues a command for restoring the detection frequency to the information terminal 20.

In this embodiment, the detection frequency of information terminals 20 such as a smartphone and a tablet may be lowered to reduce power consumption, and after the location information item is selected, the detection frequency may be restored to indicate the current location of the user without a time lag.

### Embodiment 6

Although Embodiments 1 to 5 described above describe the management system 1 that manages the user location, the user location may be used to, for example, facility equipment such as air-conditioning equipment and lighting equipment.

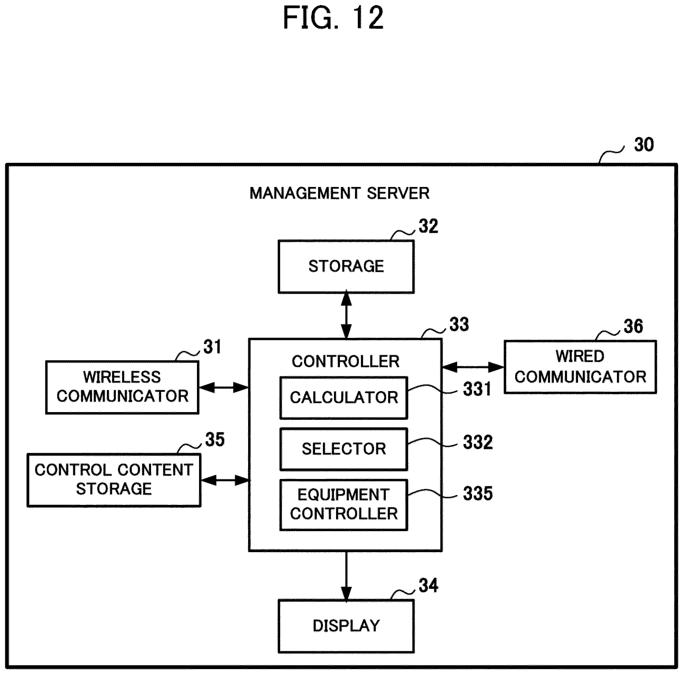

The embodiment is described below with reference to FIG. 12. FIG. 12 is a block diagram illustrating an example of configuration of a management server 30 according to Embodiment 6 of the present disclosure. As illustrated in FIG. 12, the management server 30 includes a wireless communicator 31 as an example of reception means, a storage 32 as an example of storage means, a controller 33, a display 34 as an example of display means, and a control content storage 35 as an example of control content storage means. The controller 33 includes a calculator 331, a selector 332 as an example of selection means, and a equipment controller 335 as an example of equipment control means. More specifically, the management server 30 illustrated in FIG. 12 is the management server 30 in FIG. 5 further including the control content storage 35 and a wired communicator 36, and also including the equipment controller 335 in the controller 33 in the management server 30.

The control content storage 35 stores content of control specified by a user U for facility equipment installed in a building BL. For example, for air-conditioning equipment as the facility equipment, the control content storage 35 stores temperature, wind direction, and airflow volume settings specified by the user U. For lighting equipment as the facility equipment, the control content storage 35 stores, for example, illuminance settings specified by the user U. Additionally, for audio equipment as the facility equipment, the control content storage 35 stores, for example, a music genre and a sound volume specified by the user U.

The wired communicator 36 communicates with non-illustrated facility equipment installed in the building BL. For example, the wired communicator 36 transmits, to the facility equipment, the content of control performed by the equipment controller 335 described below.

When the location information item selected by the selector 332 indicates a location in the building BL, or more specifically, on a floor, the equipment controller 335 controls the facility equipment based on the content of control stored in the control content storage 35. When settings specified by different users are incompatible with each other, the equipment controller 335 may control the facility equipment based on the content of control adjusted based on, for example, the average, priority settings, and default settings.

### Other Embodiments

In the above embodiments, the programs executable in the information terminals 20 and the management server 30 may be stored in a non-transitory computer-readable recording medium, such as a compact disc ROM (CD-ROM), a digital versatile disc (DVD), a magneto-optical (MO) disk, a universal serial bus (USB) memory device, or a memory card, for distribution. A specific or a general-purpose computer on which the programs are installed can function as the information terminals 20 and the management server 30 in Embodiments 1 and 2.

The above program may be stored in a disk device included in a server on a communication network, such as the Internet, and may be, for example, superimposed on a carrier wave to be downloaded to a computer. The processing described above may also be executed by the program activated and executed while being transferred through a communication network. The processing described above may also be executed by entirely or partially executing the program on a server while a computer is transmitting and receiving information relating to the processing through a communication network.

In the system with the above functions implementable partially by the operating system (OS) or through cooperation between the OS and applications, portions executable by applications other than the OS may be stored in a non-transitory recording medium that may be distributed or may be downloaded to the computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The technique according to one or more embodiments of the present disclosure is applicable to a management server, a management system, a location display method, and a program that correctly indicate the current location of a user using multiple terminals.

### Reference Signs List

- 1: Management system
- 10: Transmission device
- 11: Radio signal transmitter
- 20: Information terminal
- 21: Radio signal receiver
- 22: Distance-angle estimator
- 23: Storage
- 24: Location identifier
- 25: Communicator
- 26: Operation unit
- 27: Display
- 28: GPS signal receiver
- 30: Management server
- 31: Wireless communicator
- 32: Storage
- 33: Controller
- 331: Calculator
- 332: Selector
- 333: Editor
- 334: Issuer
- 335: Equipment controller
- 34: Display
- 35: Control content storage
- 36: Wired communicator

## Claims

1. A management server, comprising:
reception means for receiving location information items transmitted from a plurality of information terminals associated with a user;
selection means for selecting, when a distance between the plurality of information terminals that is based on the location information items received by the reception means is less than or equal to a threshold, a location information item corresponding to an information terminal having a highest priority level of priority levels assigned to the plurality of information terminals; and
display means for indicating a current location of the user based on the location information item selected by the selection means.

2. The management server according to claim 1, further comprising:
storage means for storing the location information items as proximity range information when the distance between the plurality of information terminals is less than or equal to the threshold, wherein
when the distance between the plurality of information terminals is greater than the threshold, the selection means selects, from the location information items received by the reception means, a location information item indicating a farthest location from a range indicated by the proximity range information stored in the storage means.

3. The management server according to claim 1, wherein
the reception means receives location information items detected in an indoor place or an outdoor place by the plurality of information terminals,
the selection means clears, based on indication place information defining one of the indoor place or the outdoor place as a display target, the priority level of an information terminal with the location information item detected in the other of the indoor place or the outdoor place that is not defined as the display target, and excludes the location information item from a selection target.

4. The management server according to claim 1, further comprising:
edition means for editing correspondences between (i) terminal IDs that are each for identification of a corresponding information terminal of the plurality of information terminals and (ii) a user ID for identification of a user, wherein
the reception means receives, based on the correspondences edited by the edition means, the location information items transmitted from the plurality of information terminals indicated by the terminal IDs that are each associated with the user ID.

5. The management server according to claim 1, further comprising:
issuing means for issuing a command for lowering a detection frequency that is a frequency at which the location information item is detected, to an information terminal of the plurality of information terminals except the information terminal having the highest priority level of the priority levels assigned to the plurality of information terminals.

6. The management server according to claim 5, wherein, when the selection means selects a location information item received from the information terminal to which the command for lowering the detection frequency is issued, the issuing means issues to the information terminal a command for restoring the detection frequency.

7. The management server according to claim 1, further comprising:
control content storage means for storing content of control specified by the user for facility equipment installed in a building; and
equipment control means for controlling the facility equipment based on the content of control stored in the control content storage means, when the location information item selected by the selection means indicates a location in the building.

8. A management system, comprising:
a plurality of information terminals associated with a user; and
a management server to manage the plurality of information terminals, wherein
each of the plurality of information terminals includes
identification means for identifying a location of the information terminal, and
transmission means for transmitting, to the management server, a location information item indicating the location identified by the identification means, and
the management server includes
reception means for receiving location information items transmitted from the plurality of information terminals,
selection means for selecting, when a distance between the plurality of information terminals that is based on the location information items received by the reception means is less than or equal to a threshold, a location information item corresponding to an information terminal having a highest priority level of priority levels assigned to the plurality of information terminals, and
display means for indicating a current location of the user based on the location information item selected by the selection means.

9. A location display method implementable by a management server, the location display method comprising:
receiving location information items transmitted from a plurality of information terminals associated with a user;
selecting, when a distance between the plurality of information terminals that is based on the received location information items is less than or equal to a threshold, a location information item corresponding to an information terminal having a highest priority level of priority levels assigned to the plurality of information terminals; and
indicating a current location of the user based on the selected location information item.

10. A program for causing a computer to function as:
a receiver to receive location information items transmitted from a plurality of information terminals associated with a user;
a selector to select, when a distance between the plurality of information terminals that is based on the location information items received by the receiver is less than or equal to a threshold, a location information item corresponding to an information terminal having a highest priority level of priority levels assigned to the plurality of information terminals; and
a display to indicate a current location of the user based on the location information item selected by the selector.
